# FASCICULE DE BREVET EUROPEEN

(11) **EP 1 431 647 B1**
(45) Date de publication et mention de la délivrance du brevet: **21.05.2008**
(21) Numéro de dépôt: 03293098.4
(22) Date de dépôt: 10.12.2003
(51) Int. Cl.: F16L 37/14, F16L 41/02, B63C 9/125

(54) **Système de raccordement d'une tête de percussion d'une bouteille de gonflage d'un équipement de sécurité**
Anschlussanordnung eines zu einer Aufpumpflasche gehörenden Aufstechkopfes einer Sicherheitseinrichtung
Coupling system for a perforating head of an inflation bottle used in a safety equipment

(30) Priorité: 16.12.2002 FR 0215933
(43) Date de publication de la demande: 23.06.2004
(73) Titulaire: Plastimo France, 56100 Lorient (FR)
(72) Inventeur: Pellen, Vincent, 56100 Lorient (FR)
(74) Mandataire: Habasque, Etienne J. Jean-François

(56) Documents cités:
- DE-A- 1 425 470
- DE-C- 4 209 000
- FR-A- 1 468 174
- US-A- 4 723 929

## Description

La présente invention concerne un système de raccordement d'une tête de percussion d'une bouteille de gonflage, à des moyens formant boudin gonflable d'un équipement de sécurité.

Cet équipement de sécurité peut par exemple être formé par un radeau de survie embarqué à bord d'un bateau.

Les systèmes de raccordement connus dans l'état de la technique comportent des raccords munis d'écrous adaptés pour être engagés autour de portions filetées d'un embout de la tête de percussion et d'embouts des moyens formant boudin gonflable pour assurer d'une part, la fixation de ces différentes pièces et d'autre part, leur raccordement.

On conçoit cependant que cette structure présente un certain nombre d'inconvénients dans la mesure où les écrous doivent être serrés à un couple précis par utilisation par exemple d'une clé dynamométrique, ce qui requiert un temps de montage relativement important.

Par ailleurs, ce système, une fois monté, est rigide et les différentes pièces entrant dans sa constitution subissent des efforts relativement importants en raison notamment du poids de la bouteille de gonflage qui est montée en porte à faux par rapport au système de raccordement. Ces systèmes doivent donc être relativement robustes, ce qui en augmente le poids et l'encombrement.

Enfin, des problèmes liés au desserrage des écrous peuvent également survenir, avec pour conséquence des possibilités de fuites extrêmement gênantes pour un équipement de survie et de sécurité, tel que par exemple un radeau de survie.

Le brevet FR-A-1468 174 montre un raccord muni d'empreintes de réception d'embouts et des moyens de verrouillage selon le préambule de la revendication 1.

Le but de l'invention est donc de résoudre ces problèmes.

A cet effet, l'invention a pour objet un système de raccordement d'une tête de percussion d'une bouteille de gonflage à des moyens formant boudin gonflable d'un équipement de sécurité défini par l'ensemble des caractéristiques de la revendication 1.

Suivant d'autres caractéristiques :
- des moyens d'étanchéité sont prévus entre le raccord et les embouts ;
- les moyens d'étanchéité comprennent, pour chaque embout, un joint torique d'étanchéité disposé dans une gorge périphérique de celui-ci ;
- les rainures du raccord présentent une extrémité ouverte débouchant sur l'un des côtés du raccord pour permettre l'introduction des pattes de verrouillage ;
- la plaque de montage comporte des moyens de fixation sur le raccord ;
- les moyens de fixation comprennent des moyens de fixation à vis-écrou ;
- il est réalisé en matière plastique.

L'invention sera mieux comprise à la lecture de la description qui va suivre, donnée uniquement à titre d'exemple et faite en se référant aux dessins annexés, sur lesquels :
- la figure 1 illustre un système de raccordement selon l'invention en position de montage ;
- les figures 2 et 3 représentent des vues de côté en perspective d'un raccord entrant dans la constitution d'un tel système ; et
- la figure 4 représente une vue en coupe illustrant un tel raccord avec des embouts de raccordement d'une tête de percussion et de moyens formant boudin gonflable en position de montage.

On a en effet illustré sur ces figures, un système de raccordement d'une tête de percussion désignée par la référence générale 1, d'une bouteille de gonflage désignée par la référence générale 2, à des moyens formant boudin gonflable d'un équipement de sécurité, tel qu'un radeau de survie (non représentés).

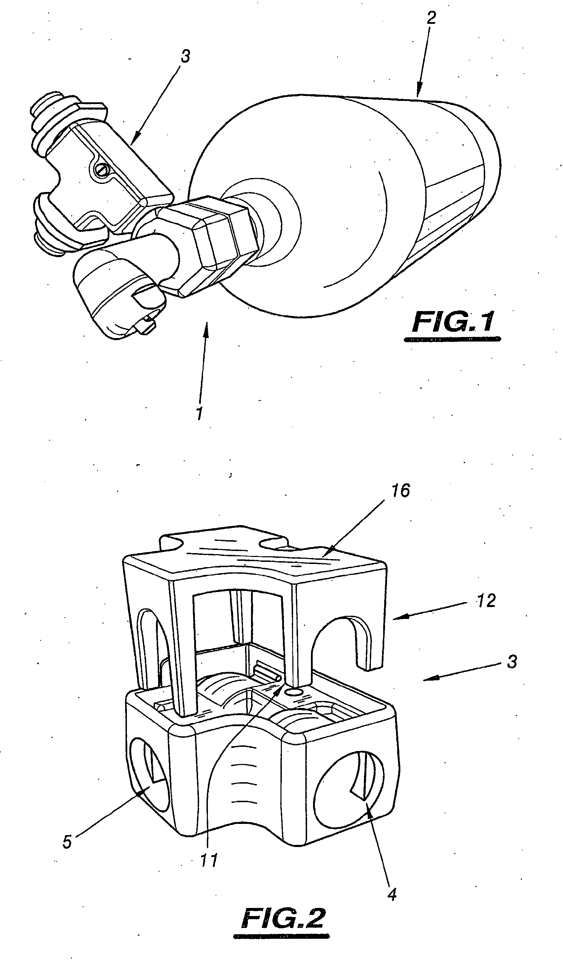

Ce système de raccordement comporte un raccord désigné par la référence générale 3, qui comme on peut le voir plus clairement sur les figures 2, 3 et 4, comporte des empreintes cylindriques de réception d'embouts tubulaires de raccordement de cette tête de percussion et de ces moyens formant boudin gonflable.

Dans l'exemple illustré sur ces figures, le raccord 3 présente la forme générale d'un T qui est donc muni de trois empreintes respectivement 4, 5 et 6 adaptées pour recevoir respectivement des embouts correspondants de la tête de percussion et des moyens formant boudin gonflable.

Bien entendu, d'autres formes de raccord peuvent être envisagées de même que des nombres différents d'empreintes et d'embouts.

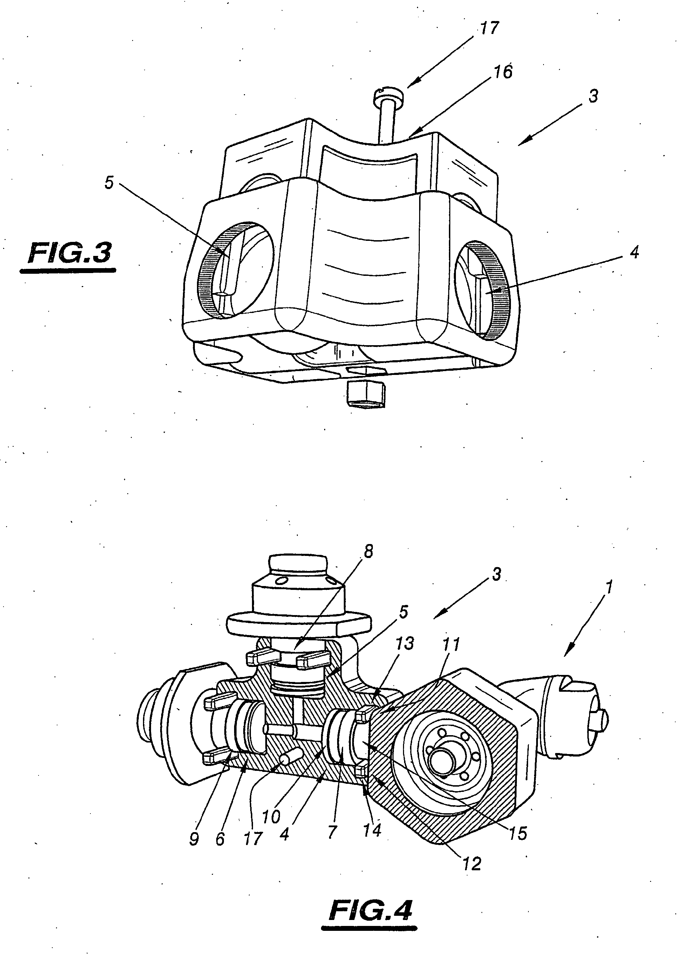

Ces embouts sont visibles plus clairement sur la figure 4 et sont désignés par les références 7, 8 et 9 respectivement, l'embout 7 étant associé à la tête de percussion 1, tandis que les embouts 8 et 9 sont associés aux moyens formant boudin gonflable.

Chaque embout tel que par exemple l'embout 7 comporte une première gorge périphérique, par exemple 10, de réception d'un joint torique destiné à constituer des moyens d'étanchéité dans l'empreinte entre l'embout correspondant et le raccord afin d'éviter toute fuite.

Bien entendu, d'autres modes de réalisation de ces moyens d'étanchéité peuvent être envisagés.

Chaque embout est maintenu en position axiale dans l'empreinte correspondante du raccord par l'intermédiaire de moyens de verrouillage comportant deux pattes de verrouillage désignées par exemple par les références 11 et 12 pour l'empreinte 4 et l'embout 7.

Ces pattes de verrouillage sont adaptées pour s'engager à la fois dans des rainures transversales correspondantes 13 et 14 du raccord, ménagées de part et d'autre de l'empreinte correspondante, par exemple 4, de celui-ci, et dans une seconde gorge périphérique par exemple 15, de l'embout 7, afin d'assurer un verrouillage en position axiale de l'embout correspondant dans l'empreinte tout en autorisant le cas échéant, la rotation de l'embout dans l'empreinte.

Ceci permet un degré de liberté en rotation de l'embout dans l'empreinte. Les risques de fuite sont éliminés et le raccord peut être optimisé dans la mesure où il n'a plus à supporter d'efforts importants.

Il peut alors être réalisé par exemple en matière plastique.

Des pattes de verrouillage analogues sont prévues pour le verrouillage des autres embouts dans les autres empreintes du raccord.

On notera également que les pattes de verrouillage associées aux différents embouts peuvent présenter des longueurs différentes pour permettre un montage successif des embouts dans le raccord.

En fait, et comme cela apparaît plus clairement sur les figures 2 et 3, ces pattes de verrouillage sont portées par une plaqué de montage 16 de celles-ci sur le raccord 3.

Ainsi, les pattes 11 et 12 associées à la première empreinte 4 et les autres pattes associées aux autres empreintes, sont reliées par cette plaque de montage désignée par la référence générale 16 sur ces figures 2 et 3, cette plaque étant réalisée par exemple en matière plastique et les pattes étant venues de moulage avec celle-ci.

Les rainures transversales correspondantes du raccord présentent alors une extrémité ouverte débouchant sur l'un des côtés de celui-ci, ce qui permet d'introduire les pattes de verrouillage en position dans celle-ci en poussant la plaque de montage de celles-ci contre le reste du raccord.

Des moyens de fixation de la plaque sur le reste du raccord peuvent également être envisagés, ces moyens de fixation étant par exemple formés par des moyens à vis-écrou, tels que désignés par la référence générale 17 sur la figure 3, traversant la plaque et le raccord.

Ceci permet alors de bloquer la plaque sur le raccord et les pattes en position de verrouillage des embouts dans les empreintes.

Bien entendu, d'autres modes de réalisation de ces moyens de fixation encore peuvent être envisagés.

On conçoit qu'un tel système de raccordement présente un certain nombre d'avantages par rapport aux systèmes de l'état de la technique, notamment au niveau de son encombrement et de son poids réduits. Il est également possible d'utiliser de la matière plastique pour réaliser les différentes pièces entrant dans la constitution de ce système. Cette utilisation de matière plastique permet alors de ne pas protéger le raccord vis-à-vis de l'environnement.

Un tel système ne nécessite pas non plus l'utilisation d'outils de montage spécifiques, tels qu'une clé dynamométrique ou encore de freins de filet, tout en assurant une très bonne étanchéité en raison de l'utilisation des joints toriques portés par exemple par les embouts.

## Revendications

1. Système de raccordement d'une tête de percussion d'une bouteille de gonflage à des moyens formant boudin gonflable d'un équipement de sécurité, qui comporte un raccord (3) muni d'empreintes (4, 5, 6) de réception d'embouts (7, 8, 9) de raccordement de la tête de percussion (1) et des moyens formant boudin gonflable et des moyens (11, 12, 13, 14, 15, 16, 17) de verrouillage en position axiale des embouts (7, 8, 9) dans les empreintes correspondantes (4, 5, 6), dans lequel les moyens de verrouillage comportent au moins pour chaque empreinte deux pattes de verrouillage (11, 12) adaptées pour s'engager dans des rainures transversales correspondantes (13, 14) ménagées dans le raccord (3) de part et d'autre de l'empreinte correspondante (4) et débouchant dans celle-ci pour s'engager également dans une gorge périphérique (15) de l'embout correspondant afin de bloquer celui-ci axialement dans l'empreinte correspondante du raccord, **caractérisé en ce que** les pattes de verrouillage (11, 12) sont portées par une plaque de montage (16) sur le raccord (3), et **en ce que** les pattes de verrouillage associées aux différentes empreintes (4, 5, 6) présentent des longueurs différentes pour permettre un montage successif des embouts (7, 8, 9) dans le raccord (3).

2. Système de raccordement selon la revendication 1, **caractérisé en ce que** des moyens d'étanchéité sont prévus entre le raccord et les embouts.

3. Système de raccordement selon la revendication 2, **caractérisé en ce que** les moyens d'étanchéité comprennent, pour chaque embout (7, 8, 9), un joint torique d'étanchéité disposé dans une gorge périphérique (10) de celui-ci.

4. Système de raccordement selon l'une quelconque des revendications précédentes, **caractérisé en ce que** les rainures du raccord (3) présentent une extrémité ouverte débouchant sur l'un des côtés du raccord (3) pour permettre l'introduction des pattes de verrouillage.

5. Système de raccordement selon l'une quelconque des revendications précédentes, **caractérisé en ce que** la plaque de montage (16) comporte des moyens de fixation (17) sur le raccord (3).

6. Système de raccordement selon la revendication 5, **caractérisé en ce que** les moyens de fixation comprennent des moyens (17) de fixation à vis-écrou.

7. Système de raccordement selon l'une quelconque des revendications précédentes, **caractérisé en ce qu'**il est réalisé en matière plastique.

## Claims

1. System for coupling a perforating head of an inflation bottle to means forming an inflatable tube in safety equipment, which comprises a connector (3) fitted with recesses (4, 5, 6) to receive joining pieces (7, 8, 9) for coupling the perforating head (1) and means forming an inflatable tube and means (11, 12, 13, 14, 15, 16, 17) for locking the joining pieces (7, 8, 9) in axial position in the corresponding recesses (4, 5, 6), wherein at least for each recess the locking means comprise two locking clamps (11, 12) adapted to engage into corresponding transverse grooves (13, 14) arranged in the connector (3) on either side of the corresponding recess (4) and opening into this to also engage in a circumferential groove (15) of the corresponding recess in order to then axially lock this in the corresponding recess of the connector, **characterised in that** the locking clamps (11, 12) are supported by an assembly plate (16) on the connector (3), and **in that** the locking clamps associated with the different recesses (4, 5, 6) have different lengths to allow the joining pieces (7, 8, 9) to be assembled successively in the connector (3).

2. Coupling system according to claim 1, **characterised in that** sealing means are provided between the connector and the recesses.

3. Coupling system according to claim 2, **characterised in that** for each joining piece (7, 8, 9) the sealing means comprise an O-ring arranged in a circumferential groove (10) thereof.

4. Coupling system according to any one of the preceding claims, **characterised in that** the grooves of the connector (3) have an open end opening onto one of the sides of the connector (3) to allow insertion of the locking clamps.

5. Coupling system according to any one of the preceding claims, **characterised in that** the assembly plate (16) comprises means (17) for fastening onto the connector (3).

6. Coupling system according to claim 5, **characterised in that** the fastening means comprise screwbolt fastening means (17).

7. Coupling system according to any one of the preceding claims, **characterised in that** it is made of plastic material.

## Patentansprüche

1. Anschlusseinrichtung für den Anschluss eines Schlagkopfs einer Aufpumpflasche an Mittel, die einen aufblasbaren Wulst einer Sicherheitseinrichtung bilden, welche ein Verbindungsstück (3), welches mit Eindrücken (4, 5, 6) zur Aufnahme von Ansatzstücken (7, 8, 9) zum Anschluss des Schlagkopfes (1) versehen ist, und einen aufblasbaren Wulst bildende Mittel und Mittel (11, 12, 13, 14, 15, 16, 17) zur Verriegelung der Ansatzstücke (7, 8, 9) in den entsprechenden Eindrücken (4, 5, 6) in axialer Lage aufweist, wobei die Verriegelungsmittel für jeden Eindruck wenigstens zwei. Verriegelungslappen (11, 12) aufweisen, die für einen Eingriff in entsprechende Querrinnen (13, 14), die im Verbindungsstück (3) auf beiden Seiten des entsprechenden Eindrucks (4) ausgenommen sind, eingerichtet sind und in diesen münden und auch in eine Randnut (15) des entsprechenden Ansatzstücks eingreifen, um diesen axial in dem entsprechenden Verbindungsstück zu blockieren, **dadurch gekennzeichnet, dass** die Verriegelungslappen (11, 12) von einer Montageplatte (16) am Verbindungsstück (3) getragen werden und dass die verschiedenen Eindrücken (4, 5, 6) zugeordneten Verriegelungslappen unterschiedlichen Längen aufweisen, um eine aufeinanderfolgende Montage der Ansatzstücke (7, 8, 9) in dem Verbindungsstück (3) zu gestatten.

2. Anschlusseinrichtung nach Anspruch 1, **dadurch gekennzeichnet, dass** Dichtmittel zwischen dem Verbindungsstück und den Ansatzstücken vorgesehen sind.

3. Anschlusseinrichtung nach Anspruch 2, **dadurch gekennzeichnet, dass** die Dichtmittel für jeden Ansatzstück (7, 8, 9) einen Dichtring aufweisen, der in einer Randnut (10) desselben aufgenommen ist.

4. Anschlusseinrichtung nach einem der vorstehenden Ansprüche, **dadurch gekennzeichnet, dass** die Rinnen des Verbindungsstücks (3) ein offenes Ende aufweisen, das auf einer der Seiten des Verbindungsstücks (3) mündet, um so das Einführen der Verriegelungslappen zu gestatten.

5. Anschlusseinrichtung nach einem der vorstehenden Ansprüche, **dadurch gekennzeichnet, dass** die Montageplatte (16) Befestigungsmittel (17) zur Befestigung am Verbindungsstück (3) aufweist.

6. Anschlusseinrichtung nach Anspruch 5, **dadurch gekennzeichnet, dass** die Befestigungsmittel Mittel (17) zur Befestigung mit Schraube und Mutter aufweisen.

7. Anschlusseinrichtung nach einem der vorstehenden Ansprüche, **dadurch gekennzeichnet, dass** sie aus Kunststoff hergestellt ist.
